# EUROPEAN PATENT APPLICATION

(11) **EP 4 530 594 A1**
(43) Date of publication of application: **02.04.2025**
(21) Application number: 23200185.9
(22) Date of filing: 27.09.2023
(51) Int. Cl.: G01M 3/00, B65B 7/28, B67B 3/26

(54) **METHOD FOR DETERMINING TIGHTNESS AND CCI OF CONTAINERS WITH A CRIMP SEAL CLOSURE**

(71) Applicant: SCHOTT Pharma Schweiz AG, 9000 St. Gallen (CH)
(72) Inventor: HAHN, Christian, 9001 St. Gallen (CH)
(74) Representative: Schott Corporate IP

(57) **Abstract**

Method for determining tightness and CCI of containers with a crimp seal closure by providing a container with a closed crimp seal closure, the crimp seal closure having an elastomer section, measuring a determined length between the top of the elastomer section and a position of the container, comparing the length to a predetermined range, and rejecting closed containers with a length outside the predetermined range.

## Description

Crimp seal closures are known in the art and are used to seal containers, for example like glass containers like vials. Testing the integrity or tightness of the closed container is important to ensure that the closure is fit for purpose. Methods for testing the tightness of a crimp seal closure are known in the art, for example from the European Patent 0892918B1. These methods work by applying a pressure to the top of the crimp seal closure and measure the movement of the crimp seal closure in reaction to the applied pressure. The disadvantages of these methods are that they are time consuming, not very reliable and destructive.

One object of the invention is to provide for a method to testing the integrity of a crimp seal closure that is easy, quick and non-destructive to perform while providing reliable results.

By providing a method according to claim 1, the invention provides for a fast, reliable and non-destructive method for testing the integrity of a crimp seal closure.

Further aspects of the invention will be described in reference to the figures in which
Fig. 1A-C shows a crimp closure, with
Fig. 1A shows a cross section of a crimp closure with a closing element along the line A-A shown in Fig. 1B,
Fig. 1B shows a top view of a crimp ring,
Fig. 1C shows a isometric view of a crimp ring,
Fig. 2 shows a cross section of a closed crimp closure on top of a container,
Fig. 3 shows a closed container,
Fig. 4 shows a measurement graph of determined length compared to tightness,
   and
Fig. 5 shows a further embodiment of a crimped closed container.

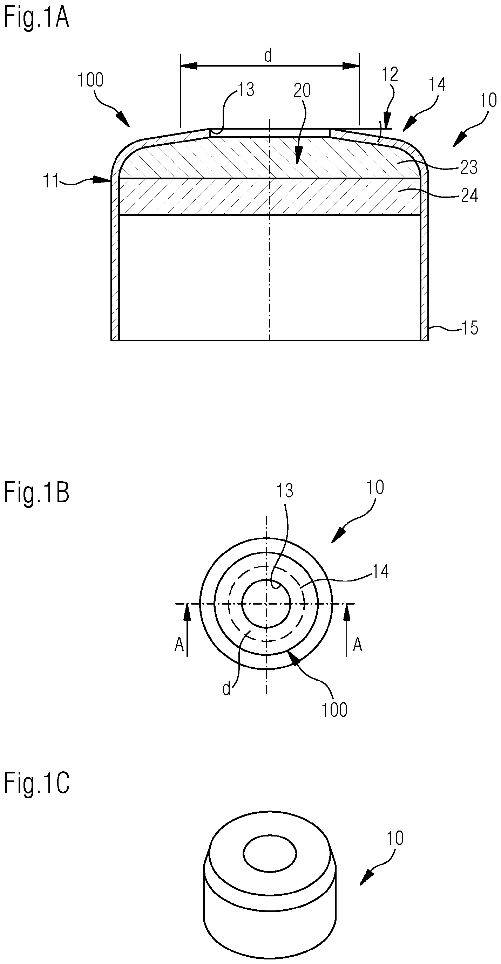

A crimp seal closure as shown in Fig. 1A-C is typically comprised of a crimp ring 10 (Fig. 1C), made up of a cylindrical body 11, with a closed end 14 having a flange 12 provided with a concentrical opening 13. The flange 12 has a top surface 100. A reference circle d has a diameter that fits concentrically between the opening 13 and the outer wall of the cylindrical body 11. The reference circle d can be used for further measurements described below. The material is typically aluminum or another suitable deformable material. In addition, the crimp seal closure is provided with an elastomer section formed as a closing element 20 that is disk shaped and fits into the cylindrical body 11. The closing element 20 is made out of an elastic material, like for example a rubber. The closing element can be made up out of a single piece (for example a rubber disk) or made out of multiple pieces, for example two (like the two sections 23 and 24 shown in Fig. 1A) or more rubber disks. The closing element is made up of a flexible material like a rubber, polyisoprene or bromobutyl.

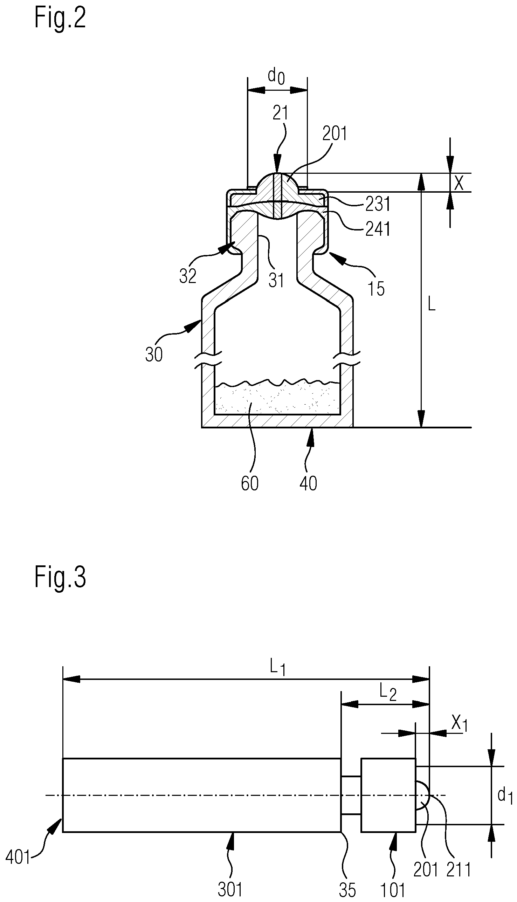

The container 30 to be closed (Fig. 2, in this example provided with a liquid content 60) has a cylindrical opening 31 provided with a circumferential flange 32. To close the container 30, the closing element 201 is placed with the crimp ring 10 and placed on top of the container 30. The lower section 15 of the cylindrical crimp ring 10 extends beyond the flange 32. To close the crimp ring 10 is pressed onto the container, thereby compressing the closing element 201 between the crimp ring 10 and the flange 32 of the container 30. Subsequently, the lower section 15 is crimped (ie deformed) on the flange 32. The result is a form closed connection of the crimp ring 10 onto the container 30, with the closing element 201 remaining under pressure, thereby closing and sealing the container 30. The pressure with which the crimp seal closure is affixed to the container is determined by the pressures used during the crimping procedure. The closing element 20 has a central protrusion 21, or bulge 21. Tools to crimp the crimp closure onto the container are widely known in the art. According to the invention, by closing the crimp ring, the central protrusion 21 extends to some extent, outward in axial direction.

For many applications, in particular in the pharmaceutical field, the reliability of the closure is essential. Tests for determining the reliability of the closure are known in the art, and essentially determine the pressure the closure can withstand before leakage occurs. For example, many leakage tests evaluate the adequacy of container closure systems to maintain a sterile barrier against potential contaminants. In essence, these methods apply a pressure to the container to be tested that is closed with a crimp seal closure to be tested and apply different pressures to the container until the seal is breached. One example of such a test is ISO21881:2019, annex F. For a specific use, a minimum pressure that needs to be able to be resisted is required. Having a closed container meeting this requirement is also called having tightness, which means no leakage out of the container. Containers that have a tight closure (i.e. resistant to leakage out of the container, for instance according to the previously mentioned ISO norm), are also very likely to have container closure integrity (CCI), which the resistance to ingress of fluids into the container.

According to the invention, the closure integrity of the crimp seal closure is determined by the height of the crimp seal closure in relation to the closed container. The height of the mounted crimp seal closure is determined by the topmost section of the closing element 21, that is the central protrusion 21. The topmost section of central protrusion 21 is the first measuring point. The second measuring point is located on a concentrical circle with a reference diameter d0 on the top surface of the crimp ring 10 (surface 100 in Fig. 1A), that is larger than the opening 13, and smaller than the circumference of the crimp ring. Within this range, any suitable diameter can be chosen. Therefore, the height X of the mounted crimp seal closure can be measured between a point on the circle d and the central protrusion 21, i.e. between the first and second measuring point. The advantage is that this measurement is easily performed and gives an accurate measurement as this is independent of the format of the body of the container.

In an alternative embodiment, the second measuring point is a predetermined section of the cylindrical body 11. In one embodiment, the predetermined section is the bottom 40 of the cylindrical body. This has the advantage of being easily determined, for example by placement on a measurement surface. The second measuring point can be any part of the container, for example a certain position on the shoulder of the container, or a specific point on the container indicated with a mark like a print or etching. In this alternative embodiment preferably dimensional variations in the geometry of the container, for example due to production tolerances, are taken into account to improve the accuracy of the measurement.

The length between the first and second measuring point is referred to as the determined length X for the first embodiment and L for the alternative embodiment. Fig. 2 shows an example of a closed container 30 according to the invention and shows the determined length of the top of the closing element compared to the container, in this embodiment with determined length L measured between the top of the closing element 21 and the bottom of the container 40. The determined length as determined by the concentric circle d0 and the top of the closing element 21 is shown as X. In Fig. 3 a closed container 301 is shown with a closure 101 and a protruding closing element 201 with a central protrusion 211 with two examples for measuring the determined length that is L1 measured between the top of the closing element 211 and the bottom 401 of the container 301 and a determined length L2 between the top of the closing element 211 and a shoulder 35 of the container 301. Further, in Fig. 3 the determined length as determined by the concentric circle d1 and the top of the closing element 211 is shown as X1.

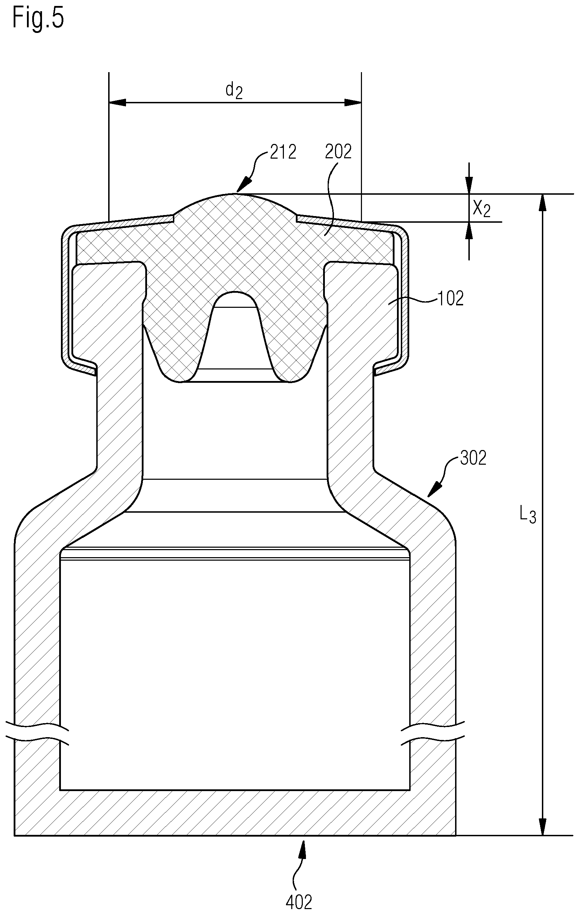

In Fig. 5 another embodiment of the invention is shown, with a closed container 302 with bottom 402. The crimp ring 102 is crimped on, with a single part closure element 202 and a topmost section 212. The closure element 212 has a central section 212 that protrudes above the crimp ring 102 after being closed. The determined length L3 is determined from the topmost section 212 to the bottom 402 of the container 302. Further, in Fig. 5 the determined length as determined by the concentric circle d2 and the top of the closing element 212 is shown as X2.

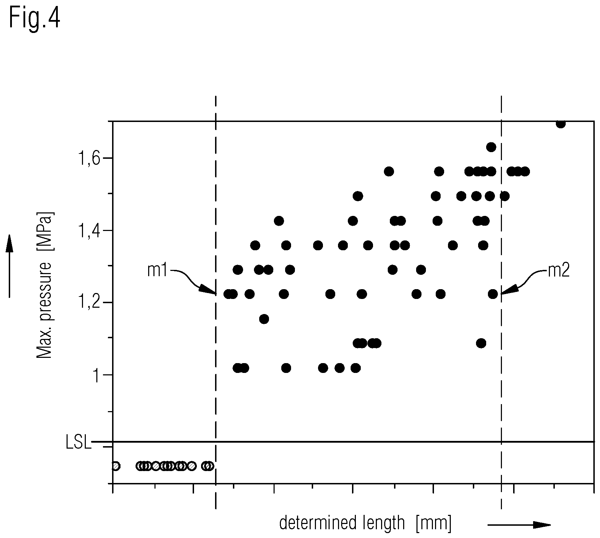

According to the invention, it was found that the determined length (L, L1, L3, X, X1, X2) is predictive of the tightness performance of the closed container. To determine the value of the determined length in relation to the tightness of the closed container, a calibration is needed. A set of containers is closed with several values for the crimping force, resulting in a set of containers with variations in the determined length of the closed container. This set of containers is tested for tightness where for each of the closed cylinders the maximum pressure where the closing integrity is still guaranteed is determined. When presenting the data in a graph form, a graph like shown in Fig. 4 is generated. On the x-axis the determined length of the closed container is shown, with on the y-axis the maximum pressure where the container is still tight for at least 5 seconds. The line LSL determines the required tightness for this specific combination of crimp closure and container, according to ISO21881:2019, Annex F. The line M1 shows the line where for the minimal determined length that corresponds to the determined length that is minimally required to ensure the required tightness. Containers which were not tight for the required pressure over 60s as required per ISO21881:2019 are indicated with a point below the line LSL.

The topmost section of the central protrusion 21, 211, 212 that is the first measuring point, can be measured using optical measurement means, for example with a camera-based vision system or a laser based system. Such optical measurement systems are known in the art. In general, measurement systems to determine geometrical measurements of pharmaceutical containers are well known in the art. Optical systems have the advantage of not needing physical contact with the central protrusion 2, 211, 212 to be measured, improving the accuracy of the measurement. Other measurement systems can also be used, for example with a mechanical measurement tool contacting the central protrusion 21, 211, 212. The contact force with which the central protrusion is tested should be kept low to avoid impacting the measurement. Contact forces between 0.01 and 0.1 N are advantageous.

Devices and machines for closing containers with a crimp closure are known in the art. The crimping force can be varied for specific combinations of crimp closure type and container type. The crimping force is one factor for determining the closing strength of the closure and plays a large role in determining whether the closed container maintains the required tightness. Due to unavoidable production machine tolerances, the effective crimping force will vary per closed container.

By performing a calibration run, that is closing a set of containers with crimps at a nominal crimping force, a set of calibration containers is generated. The determined length of each of these containers will be varied due to variation in actual crimping force. The containers in the calibration set are measured for length (bulge height) and tested for tightness. The tightness test is a go/no-go test, and this will generate a set of passed containers. These have each all a specific length, distributed along some distribution. The highest and lowest lengths will determine a range of lengths for which tightness is guaranteed. This will give a reference range for the determined length that corresponds to a test representative for tightness for the closure and container combination.

One example for a tightness test is described in ISO21881:2019, annex F, this test is suitable for implementation of the invention, but other tightness tests can be used with the invention as well.

The reference range needs to be determined for each specific type of closure and container combination.

In a further embodiment of the invention, the reference range for the determined height is determined using the same calibration test run. The lower value of the reference range is determined as in the previous example. The upper value of the reference range is determined by a geometric limit, for example a maximum height of the closed container. This is shown by line M2 in Fig. 4. This although tightness and CCI would be guaranteed with a higher height. The maximum height can for example be limited by a maximum size for further use of the closed container, for example to ensure compatibility with use in pharma applications or use in devices that have a maximum acceptance size of closed containers.

In production, each crimped container is measured and compared to the reference range, preferably directly after filling and closing. The container can be filled with a liquid, for example a liquid containing a pharmaceutical ingredient. Containers within the reference range are certain to meet the required tightness and CCI and processed further. Containers outside the range have uncertain tightness and CCI and are rejected or sorted out. Production lines and method are known in the art, for example in US 9796489.

With the simple determined length measurement, the tightness and CCI of the closed container can be quickly and reliably determined. In particular advantageous is to perform the measurement downstream of the closing machine.

The container can be of any type with an opening suitable for a crimp seal closure, for example a cartridge, vial or ampoule. The container can be made of glass, polymer or any other suitable material.

## Claims

1. Method for determining tightness of containers with a crimp seal closure comprising the steps of
providing a container with a closed crimp seal closure,
the crimp seal closure comprising an elastomer section,
measuring a determined length between the top of the elastomer section and
a position on the container,
comparing the length to a predetermined range, and
rejecting closed containers with a length outside the predetermined range.

2. Method according to claim 1, wherein the length measurement is determined between the top of the elastomer section and a position on the crimp seal closure on a reference diameter (d).

3. Method according to claim 2, wherein the position on the crimp seal closure on a reference diameter (d) is on a top surface of the crimp seal closure.

4. Method according to claim 1, wherein the length measurement is determined between the top of the elastomer section and the bottom of the closed container.

5. Method according to any of the preceding claims, wherein the elastomer section comprises two stacked rubber parts, wherein the topmost part protrudes above the crimp ring in closed condition, wherein the determined length is measured between the topmost section of the top rubber part and a position on the container.

6. Method according to any one of the preceding claims, wherein the predetermined range is determined by a calibration test.

7. Method according to any one of the preceding claims, where one of the limits of the predetermined range is determined by a maximal length.

8. Method according to any one of the preceding claims wherein the container is a vial.

9. Method according to any one of the preceding claims, wherein the step of providing a container with a closed crimp seal closure comprises the steps of providing a container with an open top, providing a crimp seal with a crimp ring and rubber closing element, and crimping the crimp seal on the open top by deforming the crimp ring, thereby closing the container.

10. Method according to claim 9, further comprising filling the container with a liquid before closing the container.

11. Method according to claim10, wherein the liquid comprises a pharmaceutical ingredient.
